# EUROPÄISCHE PATENTSCHRIFT

(11) **EP 2 686 749 B1**
(45) Veröffentlichungstag und Bekanntmachung des Hinweises auf die Patenterteilung: **13.01.2021**
(21) Anmeldenummer: 12715613.1
(22) Anmeldetag: 16.03.2012
(51) Int. Cl.: G06F 1/16, G07G 1/00, G07F 7/08

(54) **BELEGDRUCKER ZUM BEDRUCKEN VON BELEGEN**
RECEIPT PRINTER FOR PRINTING RECEIPTS
DISPOSITIF D'IMPRESSION DE PIÈCES JUSTIFICATIVES

(30) Priorität: 16.03.2011 DE 102011001331
(43) Veröffentlichungstag der Anmeldung: 22.01.2014
(60) Teilanmeldung: 14164423.7
(73) Patentinhaber: Wincor Nixdorf International GmbH, 33106 Paderborn (DE)
(72) Erfinder: BAITZ, Günter, 13629 Berlin (DE)
(86) Internationale Anmeldenummer: PCT/EP2012/054672
(87) Internationale Veröffentlichungsnummer: WO 2012/123573

(56) Entgegenhaltungen:
- EP-A1- 2 290 627
- WO-A2-02/09054
- WO-A2-03/046710
- US-A- 5 237 487
- US-A1- 2001 055 978
- US-A1- 2005 213 298
- US-A1- 2007 241 184
- US-A1- 2010 013 431
- US-A1- 2010 102 777

## Beschreibung

Die Erfindung betrifft einen Belegdrucker, der eine Druckeinheit zum Bedrucken der Belege umfasst. Der Belegdrucker wird insbesondere in Verbindung mit Kassensystemen in Einzelhandelsfilialen eingesetzt.

Bekannte Kassensysteme umfassen eine Datenverarbeitungseinheit, an die ein Belegdrucker als Peripheriegerät über ein Kabel angeschlossen ist. Ferner sind an die Datenverarbeitungseinheit eine Anzeigeeinheit zur Anzeige von Informationen an die Bedienperson des Kassensystems und eine Eingabeeinheit, beispielsweise eine Tastatur, zur Bedienung des Kassensystems angeschlossen. Problematisch an einem solchen Kassensystem ist, dass es komplex, unübersichtlich und platzintensiv ausgebaut ist. Der in Einzelhandelsunternehmen zur Verfügung stehende Platz im Kassenbereich ist knapp bemessen. Das oben beschriebene bekannte Kassensystem nimmt viel Raum ein, der nicht für andere Zwecke genutzt werden kann.

Dokument US 5 237 487 A und Dokument WO 03/046710 A2 offenbaren jeweils einen Belegdrucker mit einem daran befestigten Tablet-Computer. Dokument US 2007/241184 A1 offenbart eine Displayeinheit für ein Kassensystem mit zwei Bildschirmen. Dokument US 2005/213298 A1 offenbart eine Docking-Station für einen Tablet-Computer. Dokument EP 2 290 627 A1 offenbart ein Kassenterminal mit einem fest integrierten schwenkbaren Bildschirm.

Dokument WO 02/09054 A2 offenbart einen Belegdrucker mit einem Aufnahmefach für einen Handheld-Computer. Der Belegdrucker ist als tragbarer Drucker ausgeführt.

Dokument US 2001/055978 A1 offenbart eine weitere Docking-Station für eine tragbare Datenverarbeitungseinheit.

Es ist Aufgabe der Erfindung, einen Belegdrucker zum Drucken von Belegen anzugeben, der einen einfachen und kompakten Aufbau eines Kassensystems ermöglicht.

Diese Aufgabe wird durch einen Belegdrucker mit den Merkmalen des Anspruchs 1 gelöst. Vorteilhafte Weiterbildungen der Erfindung sind in den abhängigen Ansprüchen angegeben.

Durch das Vorsehen einer Dockingeinheit, die derart ausgebildet ist, dass ein Tablet-Computer über eine lös- und wiederherstellbare Verbindung mechanisch an dem Belegdrucker befestigbar ist, wird erreicht, dass ein Tablet-Computer einfach an dem Belegdrucker befestigt werden kann. Es ist nicht notwendig, eine separate Dockingstation zum Andocken eines Tablet-Computers vorzusehen und diese mit einem Kabel mit dem Belegdrucker zu verbinden, der als Peripheriegerät dieser Dockingstation betrieben würde. Durch den Tablet-Computer können die Datenverarbeitungseinheit des Kassensystems, die Eingabeeinheit des Kassensystems und/oder die Anzeigeeinheit des Kassensystems ersetzt werden, sodass durch das Andocken eines Tablet-Computers an dem Belegdrucker ein sehr kompakt und übersichtlich ausgebildetes Kassensystem erreicht wird. Der erfindungsgemäße Belegdrucker integriert somit die Funktion eines Belegdruckers mit der einer Dockingstation in sehr kompakter Art.

Unter einem Tablet-Computer wird insbesondere jede tragbare, flache Datenverarbeitungseinheit verstanden, die vollständig in einem Gehäuse mit einem berührungssensitiven Bildschirms untergebracht ist und per Finger und/oder Stift bedient werden kann. Solche Tablet-Computer werden häufig auch als Tablet-PC oder Notepad bezeichnet.

Die Belege werden insbesondere auf Thermopapier gedruckt, wozu die Druckeinheit eine Thermozeile zum selektiven, punktuellen Erwärmen dieses Thermopapieres umfasst. Das Thermopapier ist insbesondere als Papierbahn ausgebildet, die zu einer Thermopapierrolle zusammengerollt in dem Belegdrucker aufgenommen ist. Nach dem Drucken eines Beleges über die Druckeinheit wird dieser Beleg über eine Schneideeinheit von der Papierbahn abgetrennt, sodass dieser an den Kunden ausgehändigt werden kann.

Bei einer besonders bevorzugten Ausführungsform umfasst der Belegdrucker eine Anzeigeeinheit zum Anzeigen von Informationen an einen Kunden, wobei die Dockingeinheit vorzugsweise derart angeordnet ist, dass ein Anzeigebereich eines über die Dockingeinheit an dem Belegdrucker befestigten Tablet-Computer in eine erste Richtung gerichtet ist, und wobei die Anzeigeeinheit derart angeordnet ist, dass ein Anzeigebereich diese Anzeigeeinheit in eine zweite Richtung gerichtet ist. Die beiden Richtungen sind insbesondere einander entgegengesetzt ausgerichtet. Somit kann, wenn ein Tablet-Computer über die Dockingeinheit an dem Belegdrucker angeschlossen ist, über den Anzeigebereich des Tablet-Computers der Belegdrucker, insbesondere ein ganzes Kassensystem, von einer Bedienperson bedient werden. Hierzu ist der Anzeigebereich des Tablet-Computers dieser Bedienperson zugewandt. Über den Anzeigebereich der Anzeigeeinheit des Belegdruckers dahingegen können Informationen, insbesondere der zu bezahlende Betrag, einem Kunden angezeigt werden. Durch die Integration der Anzeigeeinheit in den Belegdrucker wird ein noch kompakterer, platzsparender Aufbau des Belegdruckers und somit des gesamten Kassensystems erreicht.

Des Weiteren kann der Belegdrucker einen Scanner zum Erfassen von Barcodes aufweisen. Mit Hilfe dieses Scanners können die Barcodes von von dem Kunden ausgewählten Waren erfasst werden, ohne dass ein separater Scanner hierzu vorgesehen sein muss. Bei einer alternativen Ausführungsform kann ein separater Scanner auch über eine Steckverbindung zwischen einem Steckverbinder des Belegdruckers und einem Steckverbinder des separaten Scanners angeschlossen sein. Alternativ oder zusätzlich kann auch mit Hilfe einer Kamera des Tablet-Computers mindestens ein Bild mit einer Abbildung des Barcodes erfasst und der Barcode mit Hilfe eines Bilderkennungsverfahrens erkannt werden. Somit kann auf einen Scanner verzichtet werden.

Ferner ist es vorteilhaft, wenn der Belegdrucker mindestens eine Schnittstelle zum Anschließen eines Peripheriegerätes umfasst. Somit können an den Belegdrucker auf einfache Weise Peripheriegeräte, beispielsweise ein Scanner, eine Tastatur oder weitere Einheiten eines Kassensystems, angeschlossen werden. Es ist insbesondere nicht notwendig, dass diese Peripheriegeräte direkt an den an der Dockingeinheit des Belegdruckers befestigten Tablet-Computer angeschlossen werden müssen. Somit wird ein einfacher, kompakter Aufbau eines Kassensystems gewährleistet. Zusätzlich oder alternativ zu der Schnittstelle zum Anschließen von Peripheriegeräten können weitere Steckverbinder vorgesehen sein, über die eine Datenübertragungsverbindung und/oder eine Stromversorgung des Belegdruckers und/oder eines über die Dockingeinheit an den Belegdrucker befestigten Tablet-Computers ausgebildet sein können.

Ferner umfasst der Belegdrucker eine Sende- und/oder Empfangseinheit zum kabellosen Senden von Daten an einen Tablet-Computer und/oder zum Empfangen von von einem Tablet-Computer ausgesandten Daten, wenn der Tablet-Computer über die Dockingeinheit an dem Belegdrucker befestigt ist. Hierdurch wird erreicht, dass auf einfache Weise Daten zwischen dem Belegdrucker und dem über die Dockingeinheit an ihm befestigten Tablet-Computer übertragen werden können, ohne dass eine Steckverbindung zwischen dem Belegdrucker und dem Tablet-Computer hierfür notwendig ist.

Die Dockingeinheit umfasst eine ortsfeste erste Adaptereinheit und eine fest mit dem Tablet-Computer verbindbare zweite Adaptereinheit, wobei die erste Adaptereinheit ein Aufnahmefach aufweist, in das die zweite Adaptereinheit zum Herstellen der lös- und wiederherstellbaren Verbindung zwischen dem Belegdrucker und dem Tablet-Computer zumindest teilweise einschiebbar ist. Somit wird erreicht, dass der Tablet-Computer auf einfache Weise an dem Belegdrucker befestigt und auch auf einfache Weise wieder von ihm getrennt werden kann.

Das Aufnahmefach weist vorzugsweise vier Begrenzungselemente auf, wobei das erste Begrenzungselement derart ausgebildet ist, dass die zweite Adaptereinheit beim Einschieben in das Aufnahmefach zumindest teilweise auf ihm gleitet. Das zweite, dritte und vierte Begrenzungselement sind an drei verschiedenen Seiten des ersten Begrenzungselements angeordnet, sodass von den vier Begrenzungselementen ein Aufnahmebereich des Aufnahmefaches begrenzt wird, in dem die zweite Adaptereinheit zumindest teilweise aufgenommen ist, wenn sie in das Aufnahmefach eingeschoben ist. Ferner hat das Aufnahmefach mindestens ein Rückhalteelement zum Verhindern des Herausfallens der zweiten Adaptereinheit aus dem Aufnahmebereich.

Das zweite, dritte und vierte Begrenzungselement sind insbesondere wandartig ausgebildet und jeweils orthogonal zum ersten Begrenzungselement angeordnet. Das zweite und vierte Begrenzungselement sind wiederum orthogonal zum dritten Begrenzungselement und parallel zueinander angeordnet. Somit wird durch die vier Begrenzungselemente und das Rückhalteelement ein kastenförmiger Aufnahmebereich begrenzt, der eine dem dritten Begrenzungselement gegenüberliegende Öffnung aufweist, in die die zweite Adaptereinheit zum Herstellen der lös- und wiederherstellbare Verbindung zwischen den beiden Adaptereinheiten auf einfache Weise zumindest teilweise eingeschoben werden kann. Somit werden ein kompakter Aufbau und dennoch eine sichere Befestigung der zweiten Adaptereinheit an den Belegdrucker erreicht.

Die zweite Adaptereinheit weist insbesondere eine Aussparung auf, in die das Rückhalteelement eingreift, wenn die zweite Adaptereinheit in das Aufnahmefach eingeschoben ist. Somit wird eine besonders sichere Befestigung der zweiten Adaptereinheit und somit eines Tablet-Computers an der ersten Adaptereinheit erreicht. Bei einer besonders bevorzugten Ausführungsform weist die erste Adaptereinheit zwei Rückhalteelemente aus, die in zwei komplementär zu ihnen ausgebildete Aussparungen der zweiten Adaptereinheit eingreifen, wenn die zweite Adaptereinheit in die erste Adaptereinheit eingeschoben ist.

Die erste Adaptereinheit hat vorzugsweise einen ersten Steckverbinder, mit dessen Hilfe eine Steckverbindung mit einem komplementär zum ersten Steckverbinder ausgebildeten zweiten Steckverbinder der zweiten Adaptereinheit herstellbar ist, wenn die zweite Adaptereinheit in dem Aufnahmefach aufgenommen und somit mit der ersten Adaptereinheit verbunden ist. Über die Steckverbindung können Daten und/oder elektrische Energie zwischen dem Belegdrucker und einem an der zweiten Adaptereinheit befestigten Tablet-Computer übertragen werden. Insbesondere können somit auch Daten zwischen dem Tablet-Computer und weiteren über die zuvor beschriebene Schnittstelle an dem Belegdrucker angeschlossenen Peripherie-Geräten übertragen werden. Ferner ist es somit nicht notwendig, dass an dem Tablet-Computer selbst Kabel zur Stromversorgung und/oder zur Datenübertagung angeschlossen werden, sodass ein besonders einfach und kompakt aufgebautes Kassensystem erreicht wird. Des Weiteren kann der Tablet-Computer somit auf einfache Weise von dem Belegdrucker getrennt werden, ohne dass hierfür Kabel von dem Tablet-Computer entfernt werden müssen. Umgekehrt kann bei dem Wiedereinsetzen des Tablet-Computers in die Dockingeinheit die Stromversorgung und/oder Datenübertragungsverbindung des Tablet-Computers durch die Steckverbindung zwischen dem ersten und dem zweiten Steckverbinder auf einfache Weise wiederhergestellt werden, ohne dass hierfür aufwendig Kabel an den Tablet-Computer angeschlossen werden müssen. Somit bleibt der Vorteil eines Tablet-Computers, nämlich seine Mobilität und einfache Handhabung, erhalten.

Ferner ist in dem Aufnahmefach mindestens ein Stift angeordnet und weist die zweite Adaptereinheit mindestens eine komplementär zu diesem Stift ausgebildete Öffnung auf. Beim Einschieben der zweiten Adaptereinheit in das Aufnahmefach greift der Stift in die Öffnung der zweiten Adaptereinheit ein, sodass die beiden Adaptereinheiten relativ zueinander beim Einschieben geführt werden und, insbesondere im hektischen Umfeld eines Kassensystems, auch beim schnellen Einschieben der zweiten Adaptereinheit in die erste Adaptereinheit Beschädigungen der Steckverbinder vermieden werden.

Es sind vorzugsweise zwei Stifte vorgesehen, die entsprechend in zwei zu ihnen komplementär ausgebildete Bohrungen der zweiten Adaptereinheit eingreifen. Die beiden Stifte sind insbesondere an dem dritten Begrenzungselement angeordnet und in das Aufnahmefach hineingerichtet. Die dem dritten Begrenzungselement abgewandten Enden der Stifte können insbesondere zugespitzt ausgebildet sein, sodass ein einfaches Einführen der Stifte in die Öffnungen sichergestellt ist.

Der Stift weist eine Nut auf, in die ein Eingriffselement der zweiten Adaptereinheit in einem ersten Betriebszustand eingreift, sodass ein Entnehmen der zweiten Adaptereinheit aus der ersten Adaptereinheit und somit ein Entfernen des Tablet-Computers von dem Belegdrucker vermieden wird. In einem zweiten Betriebszustand dagegen ist das Eingriffselement außerhalb der Nut angeordnet, sodass die zweite Adaptereinheit aus der ersten Adaptereinheit entnommen werden kann. Die zweite Adaptereinheit umfasst insbesondere ein Verstellelement, mit dessen Hilfe das Eingriffselement zwischen den beiden zuvor beschriebenen Betriebszuständen verstellt werden kann. Bei einer alternativen Ausführungsform der Erfindung kann auch eine andere Sicherung gegen das Entfernen der zweiten Adaptereinheit aus der ersten Adaptereinheit und somit gegen das Entfernen des Tablet-Computers von dem Belegdrucker vorgesehen sein.

Die erste Adaptereinheit der Dockingeinheit ist insbesondere derart an einem Gehäuse des Belegdruckers gelagert, dass sie relativ zu dem Gehäuse um eine Drehachse verschwenkbar ist. Somit wird auch die zweite Adaptereinheit, wenn sie mit der ersten Adaptereinheit verbunden ist, mit verschwenkt, sodass auch ein an der zweiten Adaptereinheit befestigter Tablet-Computer verschwenkt wird. Somit kann durch ein Verschwenken der ersten Adaptereinheit der Betrachtungswinkel des Tablet-Computers verstellt werden und somit auf einfache Weise an die Lichtverhältnisse und/oder Wünsche der Bedienerperson des Belegdruckers angepasst werden.

Der Belegdrucker umfasst insbesondere einen Verriegelungsmechanismus, mit dessen Hilfe die erste Adaptereinheit in mehreren Positionen fixiert werden kann, sodass ein unbeabsichtigtes Verschwenken der Adaptereinheit um die Drehachse vermieden wird.

Ein weiterer Aspekt betrifft eine Anordnung zum Drucken von Belegen, die einen Belegdrucker der zuvor beschriebenen Art umfasst und ferner einen Tablet-Computer hat, der mit Hilfe der Dockingeinheit des Belegdruckers an dem Belegdrucker angeordnet ist. Diese Anordnung ist insbesondere Teil eines Kassensystems.

Weitere Merkmale und Vorteile der Erfindung ergeben sich aus der folgenden Beschreibung, die die Erfindung anhand von Ausführungsbeispielen in Zusammenhang mit den beigefügten Figuren näher erläutert.

Es zeigen:
- Figur 1: eine schematische, perspektivische Darstellung eines Belegdruckers;
- Figur 2: eine schematische, perspektivische Darstellung des Belegdruckers nach Figur 1 und eines an dem Belegdrucker befestigten Tablet-Computers;
- Figur 3: eine weitere schematische, perspektivische Darstellung des Belegdruckers nach den Figuren 1 und 2;
- Figur 4: eine schematische, perspektivische Darstellung des Belegdruckers nach den Figuren 1 bis 3 mit ausgeblendetem Gehäuse;
- Figur 5: eine weitere schematische, perspektivische Darstellung des Belegdruckers nach den Figuren 1 bis 4 mit ausgeblendetem Gehäuse;
- Figur 6: eine weitere schematische, perspektivische Darstellung des Belegdruckers nach den Figuren 1 bis 5 mit ausgeblendetem Gehäuse; und
- Figur 7: eine Schnittdarstellung des Belegdruckers nach den Figuren 1 bis 6 und eines an ihm befestigten Tablet-Computers.

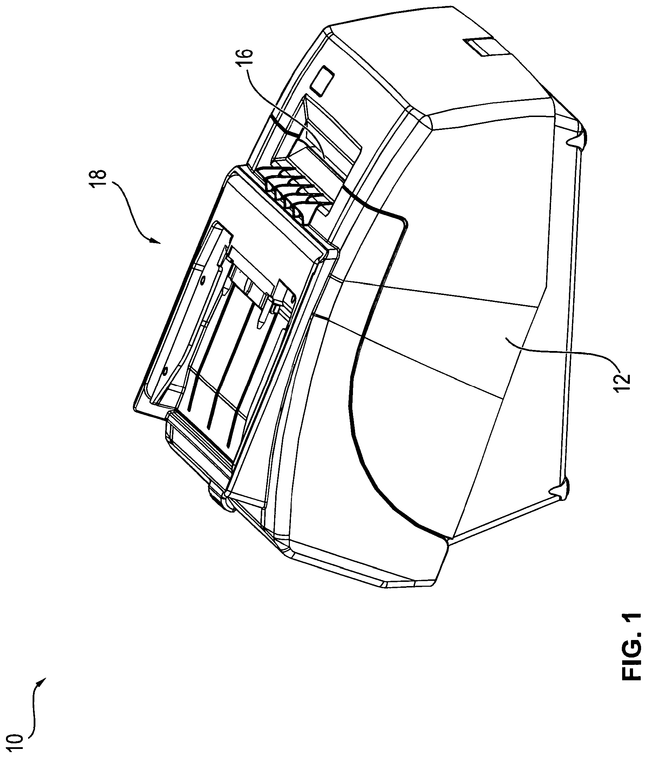

In Figur 1 ist eine schematische, perspektivische Darstellung eines Belegdruckers 10 zum Drucken von Belegen gezeigt. Ein solcher Belegdrucker 10 wird auch als Bondrucker bezeichnet und insbesondere in Verbindung mit Kassensystemen eingesetzt.

Der Belegdrucker 10 umfasst eine, in Figur 1 durch ein Gehäuse 12 des Druckers 10 verdeckte, Druckeinheit 14 zum Bedrucken von Belegen. Die gedruckten Belege werden über einen Ausgabeschlitz 16 ausgegeben, sodass sie an den Kunden ausgehändigt werden können. Die Druckeinheit 14 umfasst insbesondere mindestens eine Thermozeile, über die das Thermopapier, aus dem die Belege bestehen, punktuell erwärmt und somit mit einem Druckbild bedruckt wird. Das Thermopapier ist insbesondere in einer Form einer Papierbahn ausgebildet, wobei ein Beleg nach dem Drucken über eine Schneideeinheit der Druckeinheit 14 von der Papierbahn abgetrennt und über den Ausgabeschlitz 16 ausgegeben wird.

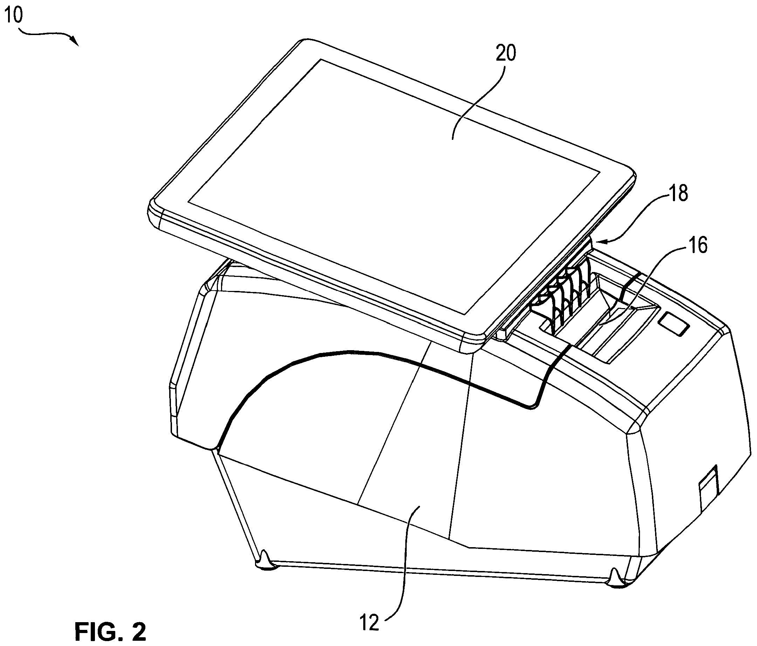

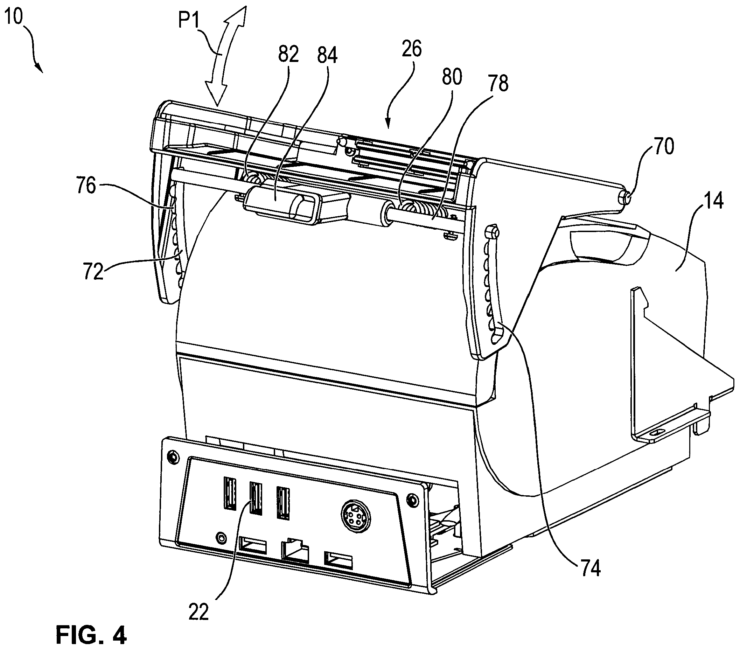

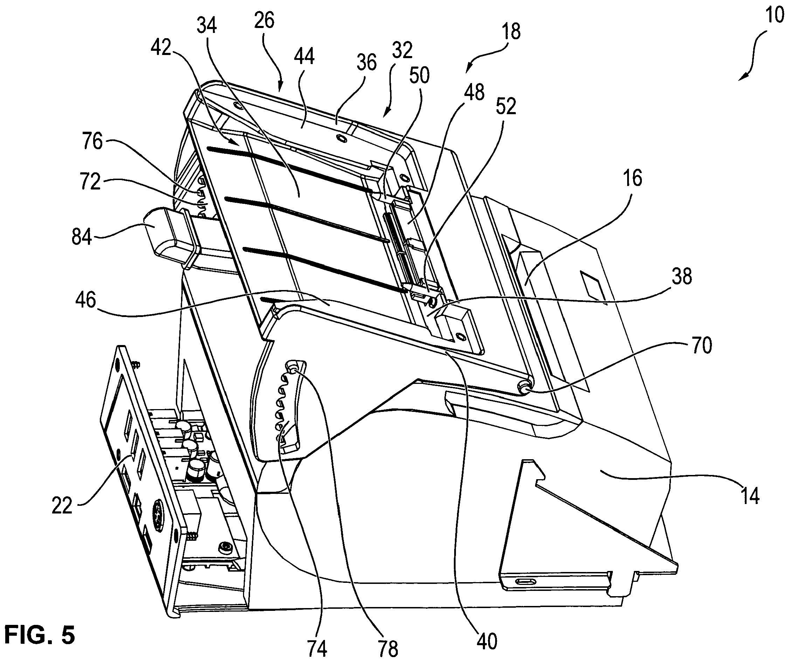

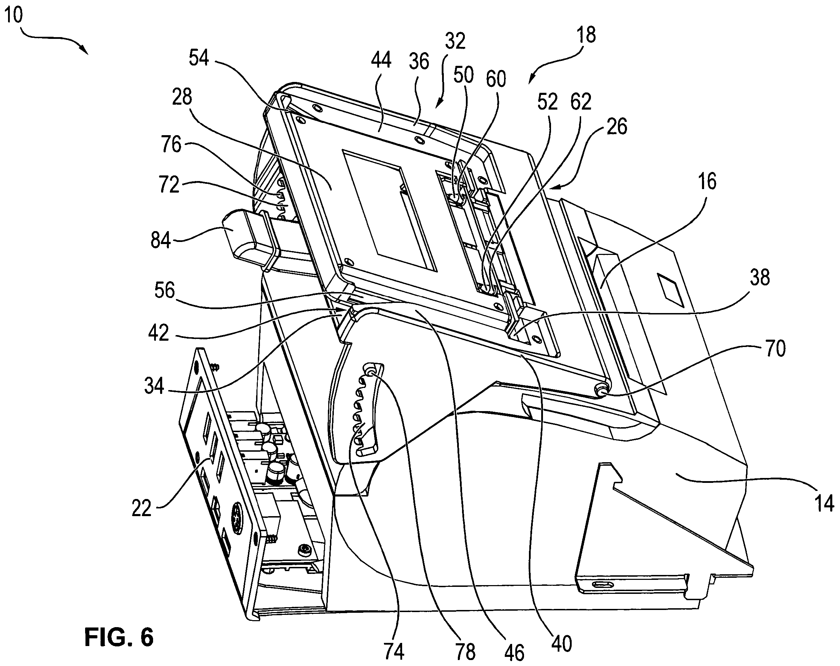

Ferner hat der Belegdrucker 10 eine Dockingeinheit 18, über die, wie in Figur 2 gezeigt, ein Tablet-Computer 20 an dem Belegdrucker 10 mechanisch befestigbar ist. Der genau Aufbau der Dockingeinheit 18 und das Befestigen des Tablet-Computers 20 über die Dockingeinheit 18 an den Belegdrucker 10 wird nachstehend in Zusammenhang mit den Figuren 4 bis 7 noch näher erläutert.

Über die Dockingeinheit 18 wird zum einen eine sichere mechanische Befestigung des Tablet-Computers 20 über eine lös- und wiederherstellbare Verbindung an den Belegdrucker 10 erreicht. Zum anderen wird über die Dockingeinheit 18 eine Datenübertragungsverbindung und/oder eine Stromversorgungsverbindung zwischen dem Belegdrucker 10 und dem Tablet-Computer 20 hergestellt.

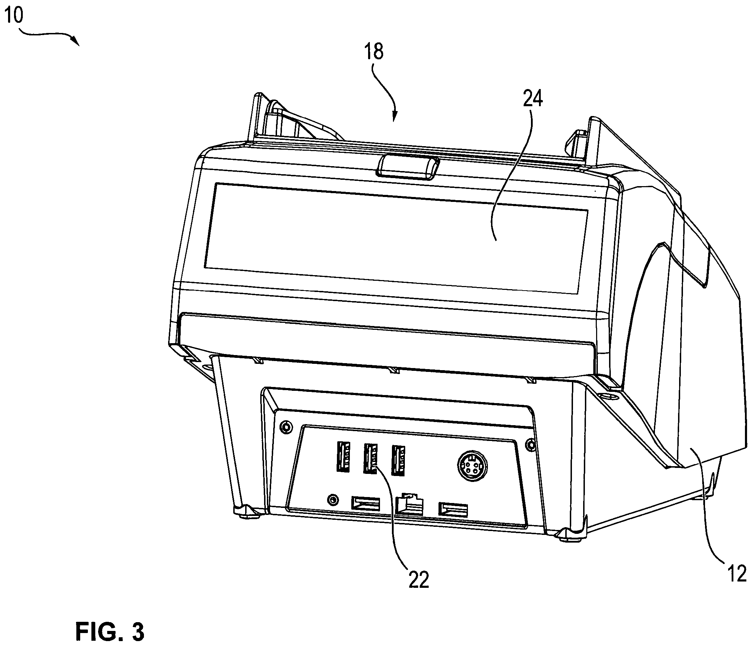

In Figur 3 ist eine weitere schematische, perspektivische Darstellung des Belegdruckers 10 nach den Figuren 1 und 2 gezeigt. Der Belegdrucker 10 weist mehrere Schnittstellen auf, von denen eine beispielhaft mit dem Bezugszeichen 22 bezeichnet ist. Über diese Schnittstellen können Peripheriegeräte, beispielsweise ein Scanner zum Einscannen von Barcodes, an den Belegdrucker 10 angeschlossen werden. Ferner kann über die Schnittstellen 22 eine Datenübertragungsverbindung zum Übertragen von Daten an den Belegdrucker 10 und/oder zum Aussenden von Daten von dem Belegdrucker 10 hergestellt werden. Des Weiteren kann über die Schnittstellen 22 eine Stromversorgung des Belegdruckers 10 und/oder des über die Dockingeinheit 18 mit dem Belegdrucker 10 verbundenen Tablet-Computers 20 erfolgen. Durch die Schnittstellen 22 ist es somit nicht notwendig, Kabel direkt an den Tablet-Computer 20 anzuschließen. Die Schnittstellen 22 sind insbesondere als USB-Schnittstelle, LAN-Schnittstelle und/oder Netzsteckverbinder ausgebildet.

Ferner umfasst der Belegdrucker 10 eine Anzeigeeinheit 24 zum Anzeigen von Informationen an einen Kunden. Über die Anzeigeeinheit 24 wird dem Kunden insbesondere der zu bezahlende Betrag angezeigt, wenn der Belegdrucker 10 als Teil eines Kassensystems verwendet wird. Die Anzeigeeinheit 24 ist derart angeordnet, dass ihr Anzeigebereich und der Anzeigebereich des Tablet-Computers in 20 unterschiedliche Richtungen gerichtet sind, sodass der Anzeigebereich des Tablet-Computers 20 von der Kassiererin bzw. dem Kassierer betrachtet und der Anzeigebereich der Anzeigeeinheit 24 von dem Kunden betrachtet werden können. Die Anzeigeeinheit 24 ist insbesondere in einer Form eines Displays ausgebildet.

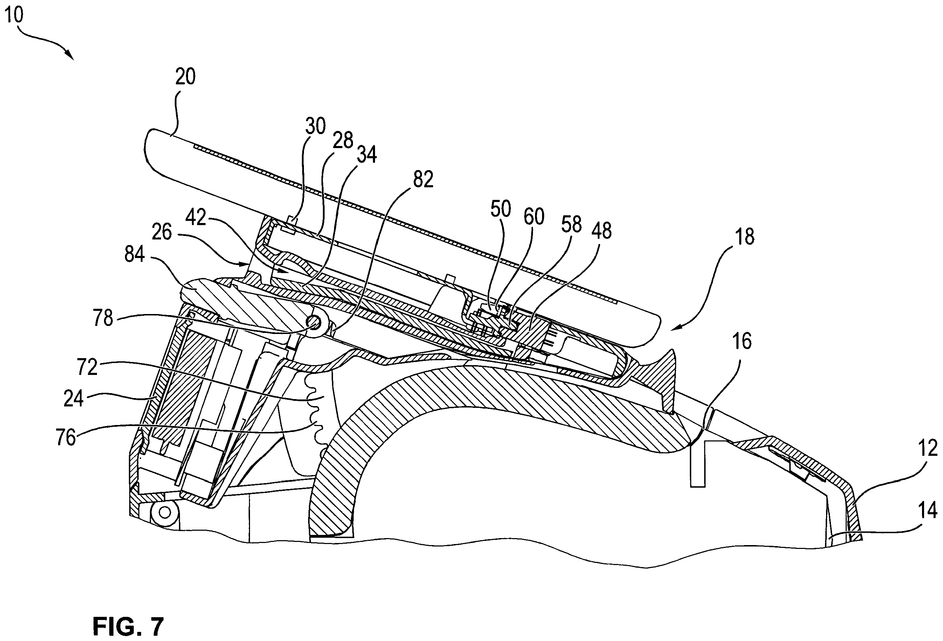

In den Figuren 4 bis 6 ist jeweils eine schematische, perspektivische Darstellung des Belegdruckers 10 dargestellt, wobei bei den drei Figuren jeweils das Gehäuse 12 ausgeblendet ist, damit die im Folgenden näher beschriebene Dockingeinheit besser sichtbar ist. Figur 7 zeigt eine Schnittdarstellung durch den Belegdrucker 10 und den mit dem Belegdrucker 10 verbundenen Tablet-Computer 20.

Die Dockingeinheit 18 umfasst eine fest mit dem Belegdrucker 10 verbundene erste Adaptereinheit 26 und eine über Nieten 30 fest mit dem Tablet-Computer 20 verbindbare zweite Adaptereinheit 28. Die erste Adaptereinheit 26 umfasst ein Aufnahmefach 32, in dem die zweite Adaptereinheit 28 zum Befestigen des Tablet-Computers 20 an dem Belegdrucker 10 zumindest teilweise aufnehmbar ist. Das Aufnahmefach 32 hat vier Begrenzungselemente 34 bis 40 über die ein Aufnahmebereich 42 des Aufnahmefaches 32 begrenzt ist. Ferner hat das Aufnahmefach 32 zwei Rückhalteelemente 44, 46, die ein Herausfallen der zweiten Adaptereinheit 28 aus dem Aufnahmebereich 42 verhindern, und somit sicherstellen, dass der Tablet-Computer 20 nicht unbeabsichtigt von der Dockingeinheit 18 gelöst wird.

Ferner umfasst die erste Adaptereinheit 26 mehrere Steckverbinder 48 und zwei Stifte 50, 52, die in den Aufnahmebereich 42 des Aufnahmefaches 32 hineinragen.

Die zweite Adaptereinheit 28 weist zwei Aussparungen 54, 56 auf, in die die Rückhalteelemente 44, 46 hineingreift, wenn die zweite Adaptereinheit 28 in die erste Adaptereinheit 26 eingeschoben wird, sodass eine sichere Befestigung des Tablet-Computers 20 an den Belegdrucker 10 erreicht wird.

Ferner weist die zweite Dockingeinheit 28 mehrere Steckverbinder 58 auf, die komplementär zu den Steckverbindern 48 der ersten Adaptereinheit 26 ausgebildet sind. Wenn die zweite Adaptereinheit 28 in das Aufnahmefach 32 eingeschoben ist, ist eine Steckverbindung zwischen den Steckverbindern 48, 58 hergestellt, über die Daten und/oder elektrische Energie zwischen den beiden Adaptereinheiten 26, 28 und somit zwischen dem Belegdrucker 10 und dem Tablet-Computer 20 übertragen werden können. Insbesondere können über diese Steckverbindung Daten und/oder elektrische Energie, die dem Belegdrucker 10 über die Schnittstellen 22 zugeführt wurden, an den Tablet-Computer 20 weiter übermittelt werden bzw. umgekehrt können von dem Tablet-Computer 20 ausgesandte Daten über die Schnittstelle 22 ausgesandt werden.

Darüber hinaus hat die zweite Dockingeinheit 28 zwei komplementär zu den Stiften 50, 52 ausgebildete Öffnungen 60, 62, in die die Stifte 50, 52 beim Einschieben der zweiten Adaptereinheit 28 in die erste Adaptereinheit 26 eingreifen, sodass die beiden Adaptereinheiten 26, 28 beim Einschieben relativ zueinander geführt sind. Somit wird, auch beim schnellen Einschieben der zweiten Adaptereinheit 28 in das Aufnahmefach 32 sichergestellt, dass die Steckverbinder 48, 58 ineinander eingreifen und keine Beschädigungen der Steckverbinder 48, 58 auftreten.

Die erste Adaptereinheit 26 ist um eine Drehachse 70 verschwenkbar an dem Gehäuse 12 gelagert, sodass die Adaptereinheit 26 und somit auch ein an ihr befestigter Tablet-Computer 20 in Richtung des Doppelpfeiles P1 verschwenkt werden können. Somit kann auf einfache Weise der Winkel des Anzeigebereichs des Tablet-Computers 20 relativ zur Horizontalen und somit der Betrachtungswinkel einer Bedienperson verändert und auf die individuellen Wünsche angepasst werden. Die erste Adaptereinheit 26 weist zwei jeweils eine Zahnung 76 aufweisende Aussparungen 72, 74 auf. Eine Stange 78 ist über zwei Federn 80, 82 derart vorgespannt, dass sie in die Zahnungen 76 von zwei parallelen Zahnstangen eingreift, sodass die erste Adaptereinheit 26 in der durch die Zahnungen 76 vorgegebenen Position gehalten ist.

Durch einen Knopf 84 kann die Stange 78 gegen die Kräfte der Federn 80, 82 derart bewegt werden, dass sie nicht mehr in die Zahnungen 76 eingreift. Während der Knopf 84 gedrückt ist, kann die erst Adaptereinheit 26 um die Drehachse 70 geschwenkt werden. Wird der Knopf 84 losgelassen, so wird die Stange 78 durch die Rückstellkraft der Federn 80, 82 wieder derart bewegt, dass sie in die Zahnungen 76 der Aussparung 72, 74 eingreift und somit die erste Adaptereinheit 26 in der entsprechend eingestellten Position hält.

Durch den Belegdrucker 10 ist es möglich, ein Kassensystem übersichtlich und platzsparend auszubilden, da durch den Tablet-Computer 20 die Funktion eines Flachbildschirms und weitere Eingabegeräte, wie beispielsweise einer Tastatur, übernommen werden kann. Durch die integrale Ausbildung eines Belegdruckers 10 und einer Dockingstation 18 in dem zuvor beschriebenen Belegdrucker 10 wird erreicht, dass der Belegdrucker 10 nicht als ein Peripheriegerät über Kabel angeschlossen werden muss, sondern einfach und kompakt als eine Einheit aufgebaut ist, an die der Tablet-Computer 20 angedockt werden kann.

### Bezugszeichenliste

- 10: Belegdrucker
- 12: Gehäuse
- 14: Druckeinheit
- 16: Ausgabeschlitz
- 18: Dockingeinheit
- 20: Tablet-Computer
- 22: Schnittstelle
- 24: Anzeigeeinheit
- 26, 28: Adaptereinheit
- 30: Niete
- 32: Aufnahmefach
- 34 bis 40: Begrenzungselement
- 42: Aufnahmebereich
- 44, 46: Rückhalteelement
- 48, 58: Steckverbinder
- 50, 52: Stift
- 54, 56: Aussparung
- 60, 62: Öffnung
- 70: Drehachse
- 72, 74: Aussparung
- 76: Zahnung
- 78: Stange
- 80, 82: Feder
- 84: Knopf
- P1: Schwenkrichtung

## Patentansprüche

1. Belegdrucker zum Drucken von Belegen,
mit einer Druckeinheit (14) zum Bedrucken der Belege,
mit einer Dockingeinheit (18), die derart ausgebildet ist, dass ein Tablet-Computer (20) über eine lös- und wiederherstellbare Verbindung mechanisch an dem Belegdrucker (10) befestigbar ist,
wobei der Belegdrucker (10) eine Sende- und/oder Empfangseinheit zum kabellosen Senden von Daten an einen Tablet-Computer (20) und/oder Empfangen von von dem Tablet-Computer (20) ausgesandten Daten, wenn der Tablet-Computer (20) über die Dockingeinheit (18) an dem Belegdrucker (10) befestigt ist, umfasst,
**dadurch gekennzeichnet,**
**dass** die Dockingeinheit (18) eine ortsfeste erste Adaptereinheit (26) und eine fest mit dem Tablet-Computer (20) verbindbare zweite Adaptereinheit (28) umfasst,
und **dass** die erste Adaptereinheit (26) ein Aufnahmefach (32) aufweist, in das die zweite Adaptereinheit (28) zum Herstellen der lös- und wiederherstellbaren Verbindung zwischen dem Belegdrucker (10) und dem Tablet-Computer (20) zumindest teilweise einschiebbar ist,
**dass** im Aufnahmefach (32) mindestens ein Stift (50, 52) angeordnet ist,
**dass** die zweite Adaptereinheit (28) mindestens eine komplementär zum Stift (50, 52) ausgebildete Öffnung (60, 62) umfasst,
**dass** der Stift (50, 52) während des Einschiebens der zweiten Adaptereinheit (28) in das Aufnahmefach (32) in die Öffnung (60, 62) eingreift,
**dass** der Stift (50, 52) eine Nut aufweist,
**dass** die zweite Adaptereinheit (28) ein Eingriffselement und eine Verstelleinheit zum Verstellen des Eingriffselements umfasst,
**dass** in einem ersten Betriebszustand das Eingriffselement in die Nut eingreift,
**dass** in einem zweiten Betriebszustand das Eingriffselement außerhalb der Nut angeordnet ist.

2. Belegdrucker (10) nach Anspruch 1, **dadurch gekennzeichnet, dass** die Druckeinheit (14) eine Thermozeile zum punktuellen Erwärmen von Thermopapier umfasst.

3. Belegdrucker (10) nach einem der vorhergehenden Ansprüche, **dadurch gekennzeichnet, dass** der Belegdrucker (10) eine Anzeigeeinheit (24) zum Anzeigen von Informationen an einen Kunden umfasst.

4. Belegdrucker (10) nach Anspruch 3, **dadurch gekennzeichnet, dass** die Dockingeinheit (18) derart angeordnet ist, dass ein Anzeigebereich eines über die Dockingeinheit (18) an dem Belegdrucker (10) befestigten Tablet-Computers (20) in eine erste Richtung gerichtet ist, und dass die Anzeigeeinheit (24) derart angeordnet ist, dass ein Anzeigebereich der Anzeigeeinheit (24) in eine zweite Richtung, insbesondere eine der ersten Richtung entgegengesetzte zweite Richtung, gerichtet ist.

5. Belegdrucker (10) nach einem der vorhergehenden Ansprüche, **dadurch gekennzeichnet, dass** der Belegdrucker (10) einen Scanner zum Erfassen von Barcodes aufweist.

6. Belegdrucker (10) nach einem der vorhergehenden Ansprüche, **dadurch gekennzeichnet, dass** mindestens eine Schnittstelle (22) zum Anschließen von Peripheriegeräten vorgesehen ist.

7. Belegdrucker (10) nach einem der vorhergehenden Ansprüche, **dadurch gekennzeichnet, dass** das Aufnahmefach (32) ein erstes Begrenzungselement (34) umfasst, auf dem die zweite Adaptereinheit (28) beim Einschieben in das Aufnahmefach (32) zumindest teilweise gleitet, dass das Aufnahmefach (32) ein zweites Begrenzungselement (36), ein drittes Begrenzungselement (38) und ein viertes Begrenzungselement (40) umfasst, die an drei verschiedenen Seiten des ersten Begrenzungselements (34) angeordnet sind, dass das erste Begrenzungselement (34), das zweite Begrenzungselement (36), das dritte Begrenzungselement (38) und das vierte Begrenzungselement (40) einen Aufnahmebereich (42) begrenzen, in dem die zweite Adaptereinheit (28) zumindest teilweise aufgenommen ist, wenn sie in das Aufnahmefach (32) eingeschoben ist, und dass das Aufnahmefach (32) mindestens ein Rückhalteelement (44, 46) zum Verhindern des Herausfallens der zweiten Adaptereinheit (28) aus dem Aufnahmebereich (42) umfasst.

8. Belegdrucker (10) nach einem der vorhergehenden Ansprüche, **dadurch gekennzeichnet, dass** die erste Adaptereinheit (26) einen ersten Steckverbinder (48) umfasst, dass die zweite Adaptereinheit (28) einen komplementär zum ersten Steckverbinder (48) ausgebildeten zweiten Steckverbinder (58) umfasst, und dass zwischen dem ersten Steckverbinder (48) und dem zweiten Steckverbinder (58) eine Steckverbindung zur Übertragung von Daten und/oder elektrischer Energie zwischen dem Belegdrucker (10) und dem Tablet-Computer (20) hergestellt ist, wenn die zweite Adaptereinheit (28) in dem Aufnahmefach (32) aufgenommen ist.

9. Belegdrucker (10) nach einem der vorhergehenden Ansprüche, **dadurch gekennzeichnet, dass** die erste Adaptereinheit (26) um eine Drehachse (70) relativ zu einem Gehäuse (12) des Belegdruckers (10) verschwenkbar an diesem Gehäuse (12) gelagert ist.

10. Anordnung zum Drucken von Belegen,
mit einem Belegdrucker (10) nach einem der Ansprüche 1 bis 9, und
mit einem Tablet-Computer (20), der über die Dockingeinheit (18) des Belegdruckers (10) an dem Belegdrucker (10) befestigt ist.

## Claims

1. Receipt printer for printing receipts,
having a printing unit (14) for printing the receipts,
having a docking unit (18) which is embodied in such a way that a tablet computer (20) can be mechanically attached to the receipt printer (10) via a releasable and restorable connection,
wherein the receipt printer (10) comprises a transceiver unit for the cableless transmission of data to a tablet computer (20) and/or reception of data which is emitted by the tablet computer (20), when the tablet computer (20) is attached to the receipt printer (10) via the docking unit (18),
**characterized**
**in that** the docking unit (18) comprises a positionally fixed first adapter unit (26) and a second adapter unit (28) which can be permanently connected to the tablet computer (20),
and **in that** the first adapter unit (26) has a receptacle compartment (32) into which the second adapter unit (28) can be at least partially inserted in order to establish the releasable and restorable connection between the receipt printer (10) and the tablet computer (20),
**in that** at least one pin (50, 52) is arranged in the receptacle compartment (32),
**in that** the second adapter unit (28) comprises at least one opening (60, 62) which is embodied in a complementary fashion to the pin (50, 52),
**in that** the pin (50, 52) engages in the opening (60, 62) during the insertion of the second adapter unit (28) into the receptacle compartment (32),
**in that** the pin (50, 52) has a groove,
**in that** the second adapter unit (28) comprises an engagement element and an adjustment unit for adjusting the engagement element,
**in that** in a first operating state the engagement element engages in the groove, and
**in that** in a second operating state the engagement element is arranged outside the groove.

2. Receipt printer (10) according to Claim 1, **characterized in that** the printing unit (14) comprises a thermocell for the punctiform heating of thermal paper.

3. Receipt printer (10) according to one of the preceding claims, **characterized in that** the receipt printer (10) comprises a display unit (24) for displaying information to a customer.

4. Receipt printer (10) according to Claim 3, **characterized in that** the docking unit (18) is arranged in such a way that a display area of a tablet computer (20) which is attached to the receipt printer (10) via the docking unit (18) is directed in a first direction, and **in that** the display unit (24) is arranged in such a way that a display area of the display unit (24) is directed into a second direction, in particular a second direction opposed to the first direction.

5. Receipt printer (10) according to one of the preceding claims, **characterized in that** the receipt printer (10) has a scanner for inputting barcodes.

6. Receipt printer (10) according to one of the preceding claims, **characterized in that** at least one interface (22) is provided for connecting peripherals devices.

7. Receipt printer (10) according to one of the preceding claims, **characterized in that** the receptacle compartment (32) comprises a first boundary element (34) on which the second adapter unit (28) at least partially slides when insertion into the receptacle compartment (32) occurs, **in that** the receptacle compartment (32) comprises a second boundary element (36), a third boundary element (38) and a fourth boundary element (40) which are arranged on three different sides of the first boundary element (34), **in that** the first boundary element (34), the second boundary element (36), the third boundary element (38) and the fourth boundary element (40) bound a receptacle area (42) in which the second adapter unit (28) is at least partially received when it is inserted into the receptacle compartment (32), and **in that** the receptacle compartment (32) comprises at least one retaining element (44, 46) for preventing the second adapter unit (28) from dropping out of the receptacle area (42).

8. Receipt printer (10) according to one of the preceding claims, **characterized in that** the first adapter unit (26) comprises a first plug-type connector (48), **in that** the second adapter unit (28) comprises a second plug-type connector (58) which is embodied in a complementary fashion to the first plug-type connector (48), and **in that** a plug-type connection for transmitting data and/or electrical energy between the receipt printer (10) and the tablet computer (20) is established between the first plug-type connector (48) and the second plug-type connector (58) when the second adapter unit (28) is received in the receptacle compartment (32).

9. Receipt printer (10) according to one of the preceding claims, **characterized in that** the first adapter unit (26) is mounted on a housing (12) of the receipt printer (10) so as to be pivotable about a rotational axis (70) relative to this housing (12).

10. Arrangement for printing receipts,
having a receipt printer (10) according to one of Claims 1 to 9, and
having a tablet computer (20) which is attached to the receipt printer (10) via the docking unit (18) of the receipt printer (10).

## Revendications

1. Dispositif d'impression de pièces justificatives pour imprimer des pièces justificatives,
avec une unité d'impression (14) pour imprimer des pièces justificatives,
avec une unité d'accueil (18) qui est réalisée de telle sorte qu'un ordinateur-tablette (20) puisse être fixé de façon mécanique au dispositif d'impression de pièces justificatives (10) via une liaison pouvant être interrompue et restaurée,
le dispositif d'impression de pièces justificatives (10) comprenant une unité d'émission et/ou de réception pour l'envoi sans fil de données à un ordinateur-tablette (20) et/ou la réception de données envoyées par l'ordinateur-tablette (20) lorsque l'ordinateur-tablette (20) est fixé au dispositif d'impression de pièces justificatives (10) via l'unité d'accueil (18),
**caractérisé**
**en ce que** l'unité d'accueil (18) comprend une première unité d'adaptateur (26) fixe sur place et une deuxième unité d'adaptateur (28) pouvant être reliée fixement à l'ordinateur-tablette (20),
et **en ce que** la première unité d'adaptateur (26) comporte un casier de logement (32) dans lequel la deuxième unité d'adaptateur (28) peut être insérée au moins en partie pour établir la liaison pouvant être interrompue et restaurée entre le dispositif d'impression de pièces justificatives (10) et l'ordinateur-tablette (20),
**en ce qu'**au moins une tige (50, 52) est disposée dans le casier de logement (32),
**en ce que** la deuxième unité d'adaptateur (28) comprend au moins une ouverture (60, 62) réalisée de façon complémentaire par rapport à la tige (50, 52),
**en ce que** la tige (50, 52) s'emboîte dans l'ouverture (60, 62) pendant l'insertion de la deuxième unité d'adaptateur (28) dans le casier de logement (32),
**en ce que** la tige (50, 52) comporte une rainure,
**en ce que** la deuxième unité d'adaptateur (28) comprend un élément de mise en prise et une unité de déplacement pour le déplacement de l'élément de mise en prise,
**en ce que**, dans un premier état de fonctionnement, l'élément de mise en prise s'emboîte dans la rainure, et
**en ce que**, dans un deuxième état de fonctionnement, l'élément de mise en prise est disposé à l'extérieur de la rainure.

2. Dispositif d'impression de pièces justificatives (10) selon la revendication 1, **caractérisé en ce que** l'unité d'impression (14) comprend une ligne thermique pour le réchauffement ponctuel de papier thermique.

3. Dispositif d'impression de pièces justificatives (10) selon l'une quelconque des revendications précédentes, **caractérisé en ce que** le dispositif d'impression de pièces justificatives (10) comprend une unité d'affichage (24) pour l'affichage d'informations à un client.

4. Dispositif d'impression de pièces justificatives (10) selon la revendication 3, **caractérisé en ce que** l'unité d'accueil (18) est disposée de telle sorte qu'une zone d'affichage d'un ordinateur-tablette (20) fixé au dispositif d'impression de pièces justificatives (10) via l'unité d'accueil (18) soit orientée dans une première direction et que l'unité d'affichage (24) est disposée de telle sorte qu'une zone d'affichage de l'unité d'affichage (24) soit orientée dans une deuxième direction, notamment une deuxième direction opposée à la première direction.

5. Dispositif d'impression de pièces justificatives (10) selon l'une quelconque des revendications précédentes, **caractérisé en ce que** le dispositif d'impression de pièces justificatives (10) comporte un scanner pour la détection de codes-barres.

6. Dispositif d'impression de pièces justificatives (10) selon l'une quelconque des revendications précédentes, **caractérisé en ce qu'**au moins une interface (22) est prévue pour le raccordement d'appareils périphériques.

7. Dispositif d'impression de pièces justificatives (10) selon l'une quelconque des revendications précédentes, **caractérisé en ce que** le casier de logement (32) comprend un premier élément de délimitation (34) sur lequel la deuxième unité d'adaptateur (28) glisse au moins en partie dans le casier de logement (32) lors de l'insertion, que le casier de logement (32) comprend un deuxième élément de délimitation (36), un troisième élément de délimitation (38) et un quatrième élément de délimitation (40) disposés au niveau de trois côtés différents du premier élément de délimitation (34), que le premier élément de délimitation (34), le deuxième élément de délimitation (36), le troisième élément de délimitation (38) et le quatrième élément de délimitation (40) délimitent une zone de logement (42) dans laquelle la deuxième unité d'adaptateur (28) est au moins en partie logée lorsqu'elle est insérée dans le casier de logement (32) et que le casier de logement (32) comprend au moins un élément de retenue (44, 46) pour empêcher que la deuxième unité d'adaptateur (28) ne se détache de la zone de logement (42).

8. Dispositif d'impression de pièces justificatives (10) selon l'une quelconque des revendications précédentes, **caractérisé en ce que** la première unité d'adaptateur (26) comprend un premier connecteur enfichable (48), que la deuxième unité d'adaptateur (28) comprend un deuxième connecteur enfichable (58) réalisé de façon complémentaire par rapport au premier connecteur enfichable (48) et qu'une liaison par enfichage prévue pour la transmission de données et/ou d'énergie électrique entre le dispositif d'impression de pièces justificatives (10) et l'ordinateur-tablette (20) est établie entre le premier connecteur enfichable (48) et le deuxième connecteur enfichable (58) lorsque la deuxième unité d'adaptateur (28) est logée dans le casier de logement (32).

9. Dispositif d'impression de pièces justificatives (10) selon l'une quelconque des revendications précédentes, **caractérisé en ce que** la première unité d'adaptateur (26) est disposée de façon à pouvoir pivoter autour d'un axe de rotation (70) par rapport à un boîtier (12) du dispositif d'impression de pièces justificatives (10), au niveau du boîtier (12).

10. Agencement d'impression de pièces justificatives,
avec un dispositif d'impression de pièces justificatives (10) selon l'une quelconque des revendications 1 à 9, et
avec un ordinateur-tablette (20) fixé au dispositif d'impression de pièces justificatives (10) via l'unité d'accueil (18) du dispositif d'impression de pièces justificatives (10).
